# EUROPEAN PATENT SPECIFICATION

(11) **EP 2 444 305 B1**
(45) Date of publication and mention of the grant of the patent: **11.03.2015**
(21) Application number: 11181517.1
(22) Date of filing: 15.09.2011
(51) Int. Cl.: B62J 1/00, B62J 7/00

(54) **Rear seat structure of all terrain vehicles**
Rücksitzstruktur für Geländefahrzeuge
Structure de siège arrière pour véhicules tout-terrain

(30) Priority: 20.10.2010 TW 099135715
(43) Date of publication of application: 25.04.2012
(73) Proprietor: Kwang Yang Motor Co., Ltd., Kaohsiung City 807 (TW)
(72) Inventor: Lan, Tzu-Jung, 813 Kaohsiung City (TW)
(74) Representative: Lang, Christian

(56) References cited:
- WO-A1-03/053769
- US-A1- 2004 239 088
- US-A1- 2006 066 122
- US-A1- 2009 195 035
- US-A1- 2010 084 212

## Description

### Cross-Reference to Related Application

This application claims the benefit of Taiwan Patent Application No. 099135715, filed on Oct. 20, 2010.

### Field of Invention

The present invention relates to a seat cushion component of an all terrain vehicle and more particularly to a rear seat structure being additionally installed behind a seat cushion of an all terrain vehicle.

### Related Art

There are at least two ways to modify a common single seat all terrain vehicles (ATV) into a dual seat model. One of the ways is to add 150 to 200mm to the wheelbase, the related fittings of the original single seat will become inapplicable if done this way, the related fittings of the rear seat has to be redesigned and the costs are relatively high. In mass production, the dual seat version is not flexible for modifications to fit both the single and dual seat requirements. The other way is to keep the same wheelbase, and to add additional related fittings for the rear seat or to have the molds slightly modified; this way can reduce the costs and is also flexible depending on customer needs.

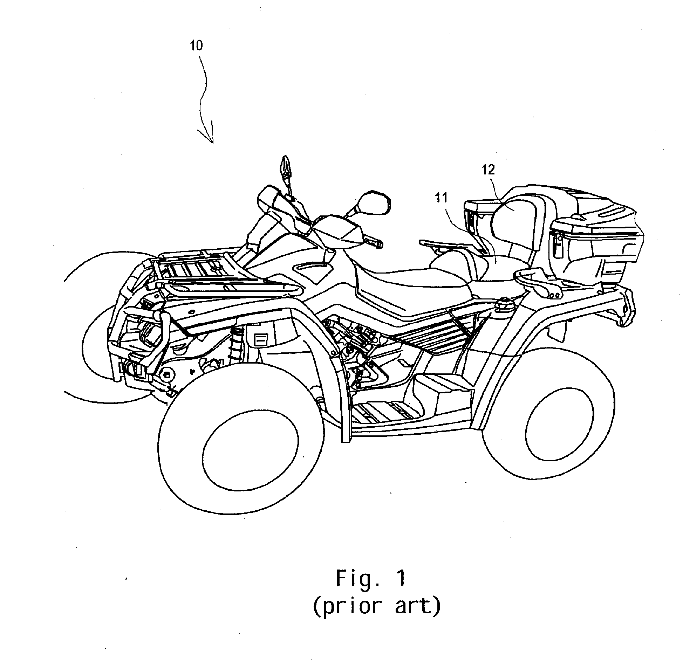

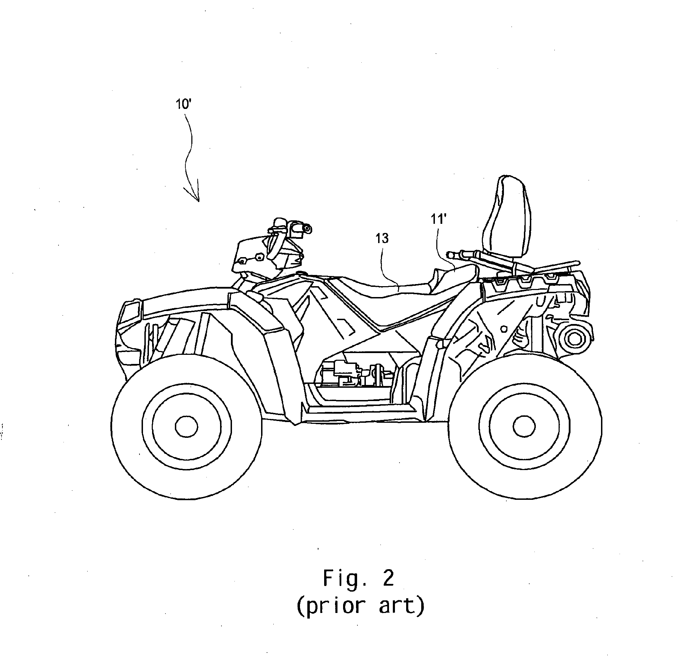

As for the way without modifying the wheelbase, the current problems are that it is inconvenient for maintenance and uncomfortable for seating. It is difficult to open the front seat cushion after additional related fittings for the rear seat cushion are installed. As shown in Fig. 1, a rear seat cushion 11 and a rear backrest 12 of an all terrain vehicle 10 are in one piece, which makes it inconvenient for maintenance and repairing of the air filter, battery and other electrical parts which are disposed under the seat cushion- Furthermore, this method substantially only modifies a single seat cushion into a dual seat cushion, therefore the comfort for seating is not ideal at all because of the length of the original seat cushion is not long enough for modifying into a dual seat. Referring to Fig. 2 of an all terrain vehicle 10', a rear seat cushion 11' is originally part of a front seat cushion 13.

The documents US 2010/0084212 A1 and US 2009/0195035 A1 disclose both an ATV which includes a pedestal assembly incorporated into foot-wells, which cooperate with a removable passenger seat. The document US 2004/0239088 A1 discloses an ATV with an elongated wheelbase, which has a rear-mounted receptacle for receiving one of a plurality of interchangeable modular components, such as a passenger seat, a cargo container, a cargo rack, a flatbed or a workbench. The document WO 03/053769 A1 discloses an ATV including a straddle mount seat secured to a frame with seating positions for a driver and a passenger. The document US 2006/0066122 A1 discloses a seat for use with ATVs providing additional seating area for passengers and preventing dirt from striking or falling upon passengers.

### SUMMARY OF THE INVENTION

A primary object of the present invention is to provide a quickly-dismountable rear seat structure for all terrain vehicles.

In order to achieve the above mentioned object, the present invention provides a rear seat structure for all terrain vehicles which comprises a seat cushion locking mechanism and a passenger seat cushion. The seat cushion locking mechanism is disposed at a rear storage rack and includes a locking element and a releasing element. The releasing element employs a pulling element to connect to the locking element. A hook element is disposed under the passenger seat cushion, and the hook element is buckled with the locking element for assembling and securing, so that the passenger seat cushion is fixed on the main seat cushion in front of the rear storage rack.

The present invention is defined in claim 1. Advantageous embodiments are set out in the dependent claims.

In the above embodiment, a rear backrest can be formed in one piece with the rear end of the passenger seat cushion, or to be independently assembled on the rear storage rack.

In the above embodiment, after the passenger seat cushion is assembled and installed, two rear armrests can also be installed on the rear storage rack by the two sides of the passenger seat cushion respectively.

The advantages of the technical solutions of the present invention mentioned above are:
1. It is still convenient to maintain and repair: Comparing to the prior art, the present invention employs an additional passenger seat cushion besides the original single seat cushion, and a seat cushion locking mechanism, not only that the passenger seat cushion can be securely assembled, but can also be dismounted quickly; so that the main seat cushion can be easily opened for convenient maintenance as featured in the original single seat.
2. Seating comfort: The exclusively designed rear storage rack of the present invention allows the installation area of the passenger seat cushion to cover the rear end of the main seat cushion and the front end of the rear storage rack, so that the overall seat space is extended to avoid affecting the seating comfort.

The present invention will become more fully understood by reference to the following detailed description thereof when read in conjunction with the attached drawings.

### BRIEF DESCRIPTION OF THE DRAWINGS

Fig. 1 is an illustration of an all terrain vehicle of a prior art with a rear seat cushion and a rear backrest being formed in one piece;
Fig. 2 is an illustration of an all terrain vehicle of a prior art with an additional rear seat cushion;
Fig. 3 is a perspective exploded view of a rear seat structure of an embodiment of an all terrain vehicle of the present invention;
Fig. 4 is a perspective assembly view of Fig. 3;
Fig. 5 is a perspective view of a seat cushion locking mechanism of an embodiment of a rear seat structure of an all terrain vehicle of the present invention;
Fig. 6 is a sectional view of a passenger seat cushion before being assembled of an embodiment of a rear seat structure of an all terrain vehicle of the present invention;
Fig. 7 is a sectional view of a passenger seat cushion after being assembled of an embodiment of a rear seat structure of an all terrain vehicle of the present invention; and
Fig. 8 is a perspective view of a passenger seat cushion of another embodiment of a rear seat structure of an all terrain vehicle of the present invention.

### DETAILED DESCRIPTION OF THE INVENTION

The embodiments of the present invention will become more fully understood by reference to the following detailed description thereof when read in conjunction with the attached drawings. It is important to note that, the attached drawings are simplified illustrations to explain and illustrate the basic structures of the present invention. Therefore, only elements related to the present invention are shown and numbered, and the elements are not drawn according to quantity, shape, dimension and proportion when being embodied. The specifications and dimensions are determined based on designs when being practically embodied, and the arrangement and configurations of the elements are possibly more complicated.

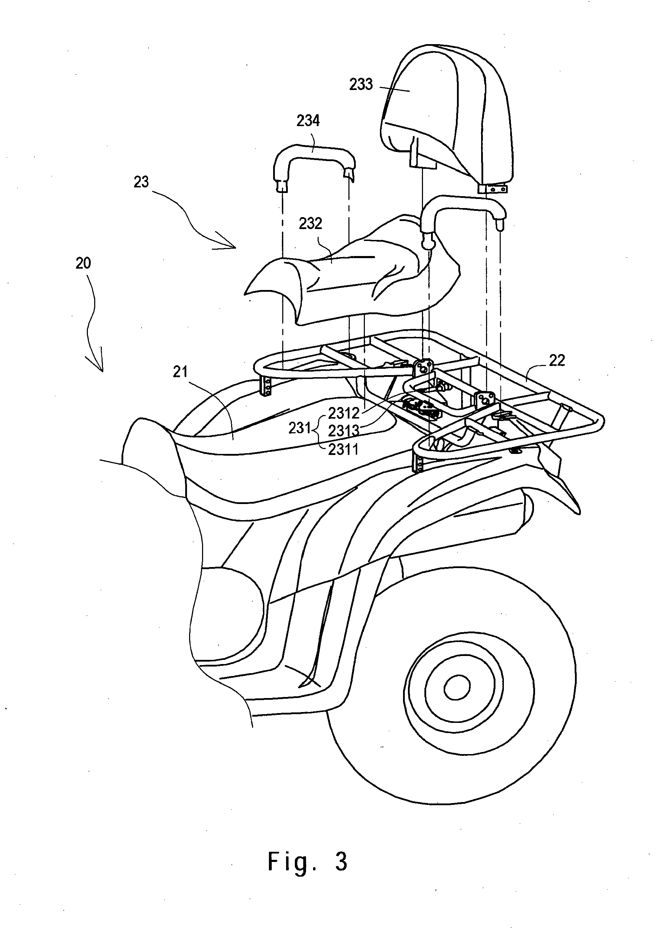

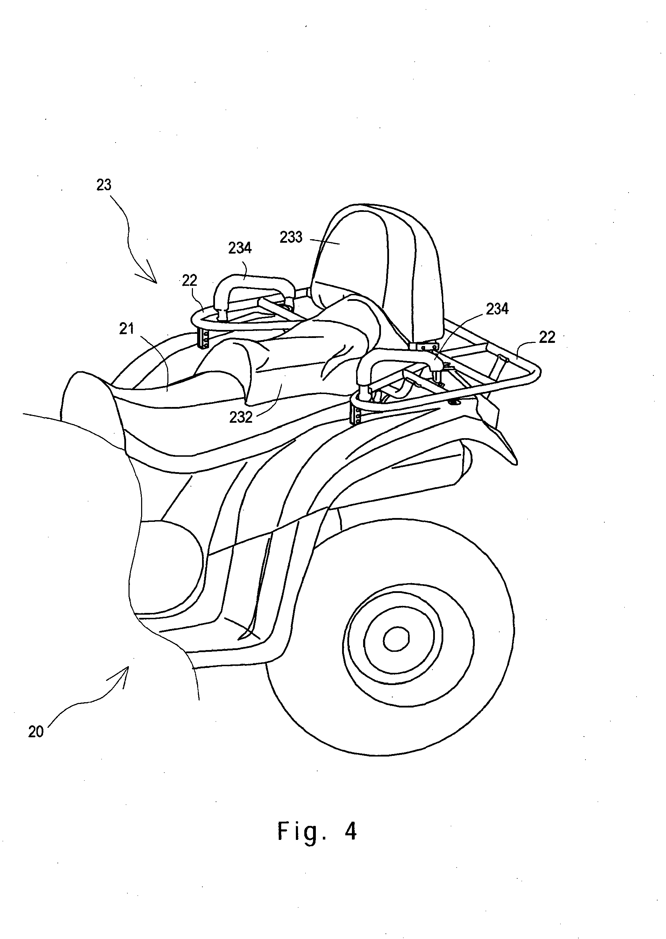

Referring to Fig. 3, a perspective exploded view of a rear seat structure of an embodiment of an all terrain vehicle of the present invention, and Fig. 4 is a perspective assembly view of Fig. 3. An all terrain vehicle 20 of the present invention includes single seat all terrain vehicles with a standard wheelbase, but not as limitations thereof. The all terrain vehicle 20 includes a main seat cushion 21 and a rear storage rack 22 disposed at the back of the main seat cushion 21. Before a passenger seat cushion 232 is installed, the main seat cushion 21 can be opened freely for maintenance and repairing (access for maintenance of common all terrain vehicles is usually disposed under the main seat cushion 21). A rear seat structure 23 includes a seat cushion locking mechanism 231 disposed at the rear storage rack 22, and the passenger seat cushion 232 which is removable and is installed on the back section of the main seat cushion 21.

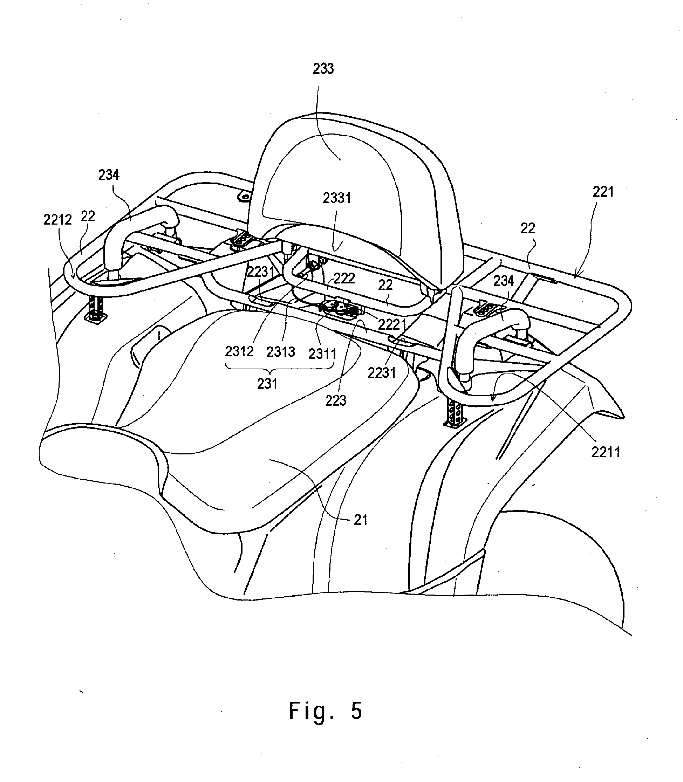

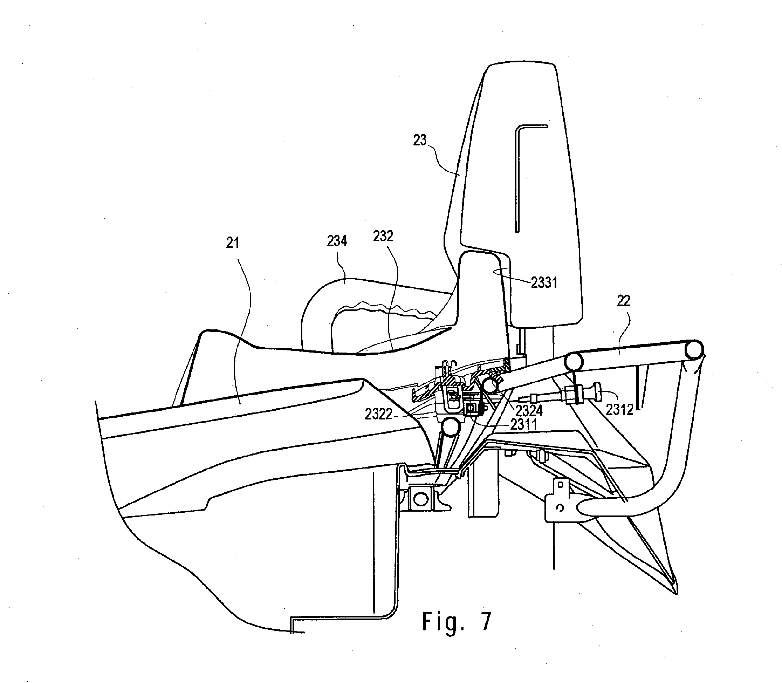

Referring to Figs. 5, 6 and 7, the seat cushion locking mechanism 231 has a locking element 2311 and a releasing element 2312. The releasing element 2312 is connected to the locking element 2311 by a pulling element 2313, so that the locking element 2311 can release articles which are locked. A hook element 2322 is disposed on an underneath portion of the passenger seat cushion 2321, the hook element 2322 is hooked with the locking element 2311 when the passenger seat cushion 232 is assembled and fixed; at this time, the front end of the passenger seat cushion 232 covers a part of the back portion of the main seat cushion 21 (the ideal covered area should not exceed half of the main seat cushion 21), and the rear portion of the passenger seat cushion 232 extends to the front end of the rear storage rack 22. In other words, the passenger seat cushion 232 is fixed on the main seat cushion 21 which is disposed in front of the rear storage rack 22. Accordingly, when it is needed to dismount the passenger seat cushion 232, simply use the releasing element 2312 to operate the pulling element 2313 to release the hook element 2322 of the passenger seat cushion 232 which is hooked with the locking element 2311; so that the passenger seat cushion 232 can be dismounted quickly, and the main seat cushion 21 can be opened freely for maintenance and repairing after the passenger seat cushion 232 is removed.

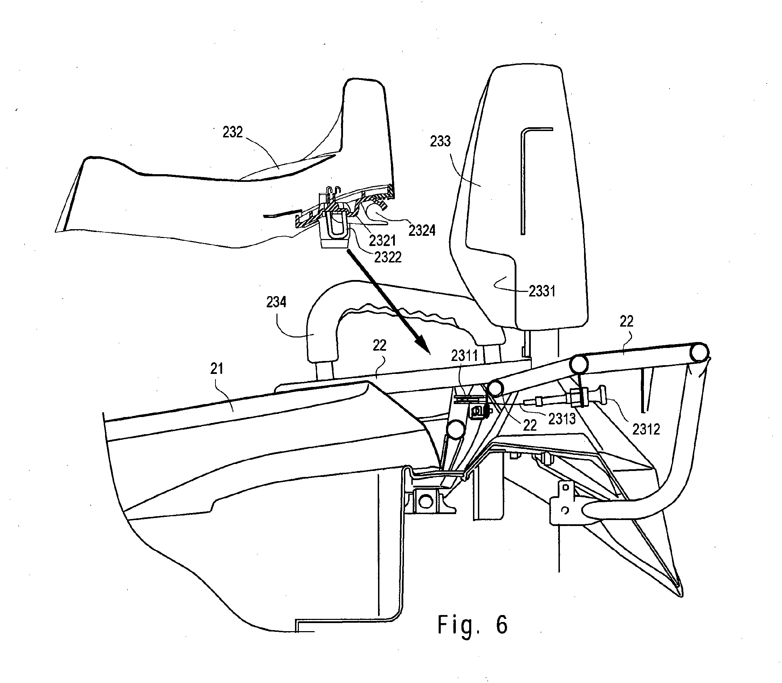

Referring to Figs. 5 and 6, to further amplify, the rear storage rack 22 includes a carrying portion 221, a left carrying portion 2211 and a right carrying portion 2212. The left carrying portion 2211 and the right carrying portion 2212 are disposed at the front left and the front right sides of the carrying portion 221 respectively. A first supporting frame 222 and a second supporting frame 223 are disposed between the left carrying portion 2211 and the right carrying portion 2212, wherein the locking element 2311 is disposed on the first supporting frame 222, while the releasing element 2312 is disposed on the carrying portion 221.

In the above embodiment, the second supporting frame 223 is disposed lower than the second supporting frame 222, so that the passenger seat cushion 232 is pressed against the second supporting frame 223. Furthermore, a dent portion 2231 can be disposed on the second supporting frame 223 for the passenger seat cushion 232 to press against.

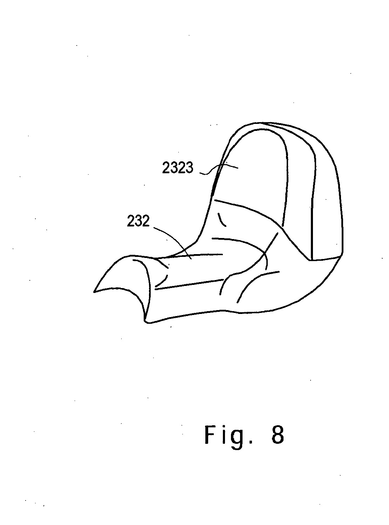

In the above embodiment, a rear backrest 2323 is formed with the rear end of the passenger seat cushion 232 in one piece as shown in Fig. 8. In the practical use of the present embodiment, the passenger seat cushion 232 can be pressed against the rear storage rack 22 after it is assembled and fixed, in order to enhance the supporting force of the rear backrest 2323.

In the above embodiment, a rear backrest 233 can be assembled with the rear seat structure 23, the rear backrest 233 is disposed on the rear storage rack 22 at the back of the passenger seat cushion 232 after the passenger seat cushion 232 is assembled and fixed. preferably, the rear backrest 233 has a recession 2331 for the passenger seat cushion 232 to press against. Furthermore, a pair of rear armrests 234 can be assembled with the rear seat structure 23, the pair of rear armrests 234 are disposed on the rear storage rack 22 and at the two sides of the passenger seat cushion 232 respectively for a passenger seating on the passenger seat cushion 232 to rest his or her arms on.

Moreover, a hook portion 2324 can be disposed underneath the passenger seat cushion 232, the hook portion 2324 is hooked on the first supporting frame 222. The first supporting frame 222 has a lower recess 2221 facing downwards for the hook portion 2324 to connect together.

It is worth to mention that, the seat cushion locking mechanism 231 of the present embodiment is a type of lock for seat cushions of motorbikes, to provide the advantages of locking function and can be quickly dismounted at the same time. Based on the same functions of the elements, common quick release locking mechanism can also be used as the seat cushion locking mechanism 231 of the present invention to achieve the same functions.

A rear seat structure of the present invention, characterized in that: Primarily, a passenger seat cushion is added to the existing single seat cushion, and applies a seat lock for securely assembling the passenger seat cushion and can also be quickly removed; so that the main seat cushion can be easily opened to achieve convenient maintenance of a single seat. Furthermore, the exclusively designed rear storage rack of the present invention allows the installation area of the passenger seat cushion to cover the rear end of the main seat cushion and the front end of the rear storage rack, so that the overall seat space is extended to avoid affecting the seating comfort.

## Claims

1. A rear seat structure (23) of an all terrain vehicle (20), said all terrain vehicle (20) comprising a main seat cushion (21) and a rear storage rack (22) disposed at the back of said main seat cushion (21), **characterized in that**: said rear seat structure (23) comprises a seat cushion locking mechanism (231) disposed on said rear storage rack (22), and a passenger seat cushion (232) dismountably disposed on the back portion of said main seat cushion (21) and in front of said rear storage rack (22), said seat cushion locking mechanism (231) having a locking element (2311) and a releasing element (2312), said releasing element (2312) is connected to said locking element (2311) with a pulling element (2313), a hook element (2322) is disposed under said passenger seat cushion (232), said hook element (2322) is buckled with said locking element (2311) to assemble, so that said passenger seat cushion (232) is fixed on said main seat cushion (21) in front of said rear storage rack (22).

2. The rear seat structure (23) of an all terrain vehicle (20) as claimed in Claim 1, wherein a rear backrest (12) is formed in one piece with the back end of said passenger seat cushion (232).

3. The rear seat structure (23) of an all terrain vehicle (20) as claimed in Claim 1, wherein a rear backrest (12) is disposed on said rear storage rack (22).

4. The rear seat structure (23) of an all terrain vehicle (20) as claimed in any one Claim of Claims 1 to 3, wherein two rear armrests (234) are disposed on said rear storage rack (22) and by the two sides of said passenger seat cushion (232) respectively.

5. The rear seat structure (23) of an all terrain vehicle (20) as claimed in Claim 1, wherein said rear storage rack (22) comprises a carrying portion (221), a left carrying portion (2211) and a right carrying portion (2212) disposed in front of said carrying portion (221), a first supporting frame (222) and a second supporting frame (223) are disposed between said left carrying portion (2211) and said right carrying portion (2212), wherein said locking element (2311) is disposed on said first supporting frame (222), while said releasing element (2312) is disposed on said carrying portion (221).

6. The rear seat structure (23) of an all terrain vehicle (20) as claimed in Claim 5, wherein said second supporting frame (223) is disposed lower than said first supporting frame (222), said passenger seat cushion (232) is pressed against said second supporting frame (223).

7. The rear seat structure (23) of an all terrain vehicle (20) as claimed in Claim 6, wherein a dent portion (2231) is disposed on said second supporting frame (223), said passenger seat cushion (232) is pressed against said dent portion (2231).

8. The rear seat structure (23) of an all terrain vehicle (20) as claimed in Claim 3, wherein said rear backrest (12) has a recession (2331), said passenger seat cushion (232) is pressed against said recession (2331).

9. The rear seat structure (23) of an all terrain vehicle (20) as claimed in Claim 6, wherein a hook portion (2324) is disposed underneath said passenger seat cushion (232), said hook portion (2324) is buckled on said first supporting frame (222).

10. The rear seat structure (23) of an all terrain vehicle (20) as claimed in Claim 9, wherein said first supporting frame (222) has a lower recess (2221) facing downwards, said lower recess (2221) is buckled with said hook portion (2324) together.

## Patentansprüche

1. Rücksitzstruktur (23) für ein Geländefahrzeug (20), wobei das besagte Geländefahrzeug (20) ein Hauptsitzpolster (21) und einen Heckgepäckträger (22) umfasst, der sich hinter dem besagten Hauptsitzpolster (21) befindet, **dadurch gekennzeichnet, dass** die besagte Rücksitzstruktur (23) eine Sitzpolsterarretiervorrichtung (231) beinhaltet, welche an dem besagten Heckgepäckträger (22) angeordnet ist, wobei ein Beifahrersitzpolster (232) abnehmbar an dem hinteren Abschnitt des besagten Hauptsitzpolsters (21) und vor dem besagten Heckgepäckträger (22) angeordnet ist, wobei die besagte Sitzpolsterarretiervorrichtung (231) ein Verriegelungselement (2311) und ein Entriegelungselement (2312) beinhaltet, wobei das besagte Entriegelungselement (2312) und das besagte Verriegelungselement (2311) über ein Zugelement (2313) verbunden sind, wobei ein Hakenelement (2322) unter dem besagten Beifahrersitzpolster (232) angebracht ist, wobei das besagte Hakenelement (2322) beim Zusammenbau in das besagte Verriegelungselement (2311) einrastet, sodass das besagte Beifahrersitzpolster (232) an dem besagten Hauptsitzpolster (21) vor dem besagten Heckgepäckträger (22) fixiert wird.

2. Rücksitzstruktur (23) für ein Geländefahrzeug (20) nach Anspruch 1, wobei eine hintere Rückenlehne (12) einteilig mit dem hinteren Ende des besagten Beifahrersitzpolsters (232) ausgebildet ist.

3. Rücksitzstruktur (23) für ein Geländefahrzeug (20) nach Anspruch 1, wobei eine hintere Rückenlehne (12) an dem besagten Heckgepäckträger (22) angeordnet ist.

4. Rücksitzstruktur (23) für ein Geländefahrzeug (20) nach einem der Ansprüche 1 bis 3, wobei zwei hintere Armlehnen (234) an dem besagten Heckgepäckträger (22) und jeweils an beiden Seiten neben dem besagten Beifahrersitzpolster (232) angeordnet sind.

5. Rücksitzstruktur (23) für ein Geländefahrzeug (20) nach Anspruch 1, wobei der besagte Heckgepäckträger (22) einen Trägerabschnitt (221) umfasst, wobei ein linker Trägerabschnitt (2211) und ein rechter Trägerabschnitt (2212) vor dem besagten Trägerabschnitt (221) angeordnet sind, wobei ein erster Stützrahmen (222) und ein zweiter Stützrahmen (223) zwischen dem besagten linken Trägerabschnitt (2211) und dem besagten rechten Trägerabschnitt (2212) angeordnet sind, wobei das besagte Verriegelungselement (2311) an dem besagten ersten Stützrahmen (222) angebracht ist, während das besagte Entriegelungselement (2312) an dem besagten Trägerabschnitt (221) angebracht ist.

6. Rücksitzstruktur (23) für ein Geländefahrzeug (20) nach Anspruch 5, wobei der besagte zweite Stützrahmen (223) niedriger als der besagte erste Stützrahmen (222) angeordnet ist, wobei das besagte Beifahrersitzpolster (232) gegen den besagten zweiten Stützrahmen (223) gedrückt wird.

7. Rücksitzstruktur (23) für ein Geländefahrzeug (20) nach Anspruch 6, wobei ein Vertiefungsabschnitt (2231) an dem besagten zweiten Stützrahmen (223) ausgebildet ist, wobei das besagte Beifahrersitzpolster (232) gegen den besagten Vertiefungsabschnitt (2231) gedrückt wird.

8. Rücksitzstruktur (23) für ein Geländefahrzeug (20) nach Anspruch 3, wobei die besagte hintere Rückenlehne (12) eine Aussparung (2331) beinhaltet, wobei das besagte Beifahrersitzpolster (232) gegen die besagte Aussparung (2331) gedrückt wird.

9. Rücksitzstruktur (23) für ein Geländefahrzeug (20) nach Anspruch 6, wobei ein Hakenabschnitt (2324) unterhalb des besagten Beifahrersitzpolsters (232) angeordnet ist, wobei der besagte Hakenabschnitt (2324) an dem besagten ersten Stützrahmen (222) einrasten kann.

10. Rücksitzstruktur (23) für ein Geländefahrzeug (20) nach Anspruch 9, wobei der besagte erste Stützrahmen (222) eine untere Ausnehmung (2221) aufweist, die nach unten gerichtet ist, wobei die besagte untere Ausnehmung (2221) und der besagte Hakenabschnitt (2324) ineinander einrasten können.

## Revendications

1. Structure de siège arrière (23) d'un véhicule tout-terrain (20), ledit véhicule tout-terrain (20) comprenant un coussin de siège principal (21) et un porte-bagages arrière (22) disposé à l'arrière dudit coussin de siège principal (21), **caractérisée en ce que** : ladite structure de siège arrière (23) comprend un mécanisme de verrouillage de coussin de siège (231) disposé sur ledit porte-bagages arrière (22), et un coussin de siège passager (232) disposé de façon démontable sur la partie arrière dudit coussin de siège principal (21) et devant ledit porte-bagages arrière (22), ledit mécanisme de verrouillage de coussin de siège (231) comportant un élément de verrouillage (2311) et un élément de libération (2312), ledit élément de libération (2312) est relié audit élément de verrouillage (2311) par un élément de traction (2313), un élément de crochet (2322) est disposé sous ledit coussin de siège passager (232), ledit élément de crochet (2322) est bouclé avec ledit élément de verrouillage (2311) pour s'assembler, de sorte que ledit coussin de siège passager (232) est fixé sur ledit coussin de siège principal (21) devant ledit porte-bagages arrière (22).

2. Structure de siège arrière (23) d'un véhicule tout-terrain (20) selon la revendication 1, dans laquelle un dossier arrière (12) est formé d'un seul tenant avec l'extrémité arrière dudit coussin de siège passager (232).

3. Structure de siège arrière (23) d'un véhicule tout-terrain (20) selon la revendication 1, dans laquelle un dossier arrière (12) est disposé sur ledit porte-bagages arrière (22).

4. Structure de siège arrière (23) d'un véhicule tout-terrain (20) selon l'une quelconque des revendications des revendications 1 à 3, dans laquelle deux accoudoirs arrière (234) sont disposés sur ledit porte-bagages arrière (22) et des deux côtés dudit coussin de siège passager (232), respectivement.

5. Structure de siège arrière (23) d'un véhicule tout-terrain (20) selon la revendication 1, dans laquelle ledit porte-bagages arrière (22) comprend une partie support (221), une partie support gauche (2211) et une partie support droite (2212) disposées devant ladite partie support (221), un premier cadre de support (222) et un second cadre de support (223) sont disposés entre ladite partie support gauche (2211) et ladite partie support droite (2212), dans laquelle ledit élément de verrouillage (2311) est disposé sur ledit premier cadre de support (222), tandis que ledit élément de libération (2312) est disposé sur ladite partie support (221).

6. Structure de siège arrière (23) d'un véhicule tout-terrain (20) selon la revendication 5, dans laquelle ledit second cadre de support (223) est disposé plus bas que ledit premier cadre de support (222), ledit coussin de siège passager (232) est pressé contre ledit second cadre de support (223).

7. Structure de siège arrière (23) d'un véhicule tout-terrain (20) selon la revendication 6, dans laquelle une partie bosse (2231) est disposée sur ledit second cadre de support (223), ledit coussin de siège passager (232) est pressé contre ladite partie bosse (2231).

8. Structure de siège arrière (23) d'un véhicule tout-terrain (20) selon la revendication 3, dans laquelle ledit dossier arrière (12) présente un creux (2331), ledit coussin de siège passager (232) est pressé contre ledit creux (2331).

9. Structure de siège arrière (23) d'un véhicule tout-terrain (20) selon la revendication 6, dans laquelle une partie crochet (2324) est disposée sous ledit coussin de siège passager (232), ladite partie crochet (2324) est bouclée sur ledit premier cadre de support (222).

10. Structure de siège arrière (23) d'un véhicule tout-terrain (20) selon la revendication 9, dans laquelle ledit premier cadre de support (222) comporte un évidement inférieur (2221) tourné vers le bas, ledit évidement inférieur (2221) est bouclé conjointement avec ladite partie crochet (2324).
